# EUROPÄISCHE PATENTSCHRIFT

(11) **EP 0 927 091 B1**
(45) Veröffentlichungstag und Bekanntmachung des Hinweises auf die Patenterteilung: **08.11.2000**
(21) Anmeldenummer: 97909272.3
(22) Anmeldetag: 16.09.1997
(51) Int. Cl.: B23P 19/00, F16B 35/00

(54) **VORRICHTUNG ZUM AUTOMATISIERTEN SETZEN VON HALTEBOLZEN AUF TRÄGERFLÄCHEN**
DEVICE FOR PLACING AUTOMATICALLY FASTENING BOLTS ON SUPPORTING SURFACES
DISPOSITIF POUR POSER DE FACON AUTOMATISEE DES BOULONS DE FIXATION SUR DES SURFACES DE SUPPORT

(30) Priorität: 20.09.1996 DE 19638521
(43) Veröffentlichungstag der Anmeldung: 07.07.1999
(73) Patentinhaber: A. Raymond & Cie, 38028 Grenoble (FR)
(72) Erfinder: LESSER, Hans-Jürgen, D-79618 Rheinfelden (DE); BREMONT, Michel, F-68300 Saint-Louis (FR); LUBERT, Thomas, D-14050 Berlin (DE)
(74) Vertreter: Kirchgaesser, Johannes, Dipl.-Ing.
(86) Internationale Anmeldenummer: EP9705052
(87) Internationale Veröffentlichungsnummer: WO9812016

(56) Entgegenhaltungen:
- EP-A- 0 134 164
- EP-A- 0 292 758
- EP-A- 0 495 578
- EP-A- 0 553 529
- DE-A- 1 925 766
- DE-A- 2 230 412
- FR-A- 2 144 867
- GB-A- 1 513 052
- US-A- 3 563 361
- US-A- 4 355 222
- US-A- 4 478 669
- US-A- 4 602 537
- US-A- 4 822 656
- US-A- 4 853 075
- US-A- 4 872 603
- US-A- 5 414 247

## Beschreibung

Die Erfindung bezieht sich auf eine Vorrichtung zum automatisierten Setzen und Aufkleben von Haltebolzen auf Trägerflächen, wobei die Haltebolzen mit Tellerbünden versehen sind, welche an ihrer Unterseite mit einem trockenen, durch Wärmeeinwirkung reaktivierbaren Schmelzklebstoff beschichtet sind.

Aus **DE-A-44 02 550** ist bereits eine Vorrichtung zum Setzen von solchen Haltebolzen bekannt, bei der die Bolzenschäfte von einer Greifzange erfaßt, welche von einem Roboterarm in die vorgesehene Fügeposition bringbar ist. Über die Art, wie die Haltebolzen der Greifzange zugeführt und von dieser erfaßt und gesetzt werden, ist aus dieser Druckschrift nichts zu entnehmen.

Aus **DE-A-22 30 412** ist eine Vorrichtung zum automatisierten Setzen von Befestigungselementen bekannt, welche sich mit dem Wärmedruckeinbau der Befestigungselemente in kalte Werkstücke aus thermoplastischem Kunststoff befaßt. Hierbei werden insbesondere metallische Gewindeeinsätze mittels eines beheizbaren Widerlagers auf Einschmelztemperatur erwärmt und dann mittels eines Dorns in das Werkstück eingedrückt.

Die Vorrichtung besteht aus einem länglichen Gehäuse mit einer Auffangvorrichtung für die Gewindeeinsätze und einem Zuführungskanal, welcher an seinem aus dem Gehäuse vorstehenden Ende mit einem flexiblen Zuführschlauch verbunden ist, durch welchen die Gewindeeinsätze mittels Druckluft in die Auffangvorrichtung gefördert werden.

Zum Aufwärmen des Gewindeeinsatzes wird eine gebündelte Infrarotstrahlung verwendet, die in Verbindung mit Reflektoren dafür sorgt, daß der komplette Gewindeeinsatz in relativ kurzer Zeit auf die Eindrücktemperatur erwärmt wird. Diese Vorrichtung ist zum Aufkleben von mit Klebstoff beschichteten Haltebolzen nicht geeignet, weil die Auffangvorrichtung nicht zum Halten und örtlichen Aufwärmen der Klebschicht eingerichtet ist.

Aus **US 4 478 669** ist ferner eine Vorrichtung zum Setzen und Aufkleben von Haltebolzen auf Trägerflächen bekannt, bei denen die Haltebolzen mit Tellerbünden versehen sind, welche an ihrer Unterseite mit einem trockenen, durch Wärmeeinwirkung reaktivierbaren Schmelzklebstoff beschichtet sind. Das Aufwärmen erfolgt zwar in einem mit einer Induktionsspule versehenen Setzkopf, doch fehlt hierbei die bei der Erfindung vorausgesetzte, automatisierte Zufuhr der Haltebolzen.

Diese werden vielmehr einzelnd von unten in eine Aussparung des Setzkopfes eingesetzt und dann durch Ansaugen von Luft in dieser Aussparung gehalten, bis der Schmelzkleber nach Einschalten des Induktionsstroms soweit geschmolzen ist, daß der Haltebolzen durch Absenken des Setzkopfes auf die Trägerplatte angedrückt und aufgeschmolzen werden kann.

Aufgabe der vorliegenden Erfindung ist es, eine Vorrichtung zum automatisierten Setzen und Aufkleben von mit Schmelzklebstoff beschichteten Haltebolzen ( Klebebolzen ) der vorgenannten Art zu schaffen, mit welcher sich die von einem Zuführkanal mittels Druckluft herangeführten Klebebolzen auf den Trägerflächen an den vorgesehenen Fügestellen in kürzester Zeit sicher und dauerhaft verkleben lassen.

Diese Aufgabe wird erfindungsgemäß bei der vorbeschriebenen Vorrichtung unter Verwendung eines länglichen Gehäuses mit einer Bolzenauffangstation und einem Bolzenzuführungskanal, welcher an seinem aus dem Gehäuse vorstehenden Ende mit einem flexiblen Zuführschlauch verbindbar ist, durch welchen die Haltebolzen mittels Druckluft in das Gehäuse und durch den Bolzenzuführkanal bis zur Auffangstation förderbar sind, dadurch gelöst, daß sich am Ende des Zuführkanals ein mit einer Induktionsspule versehener Zylinder (= Induktor) befindet, in welchen der Haltebolzen mit dem Tellerbund voraus einführbar ist, wobei oberhalb des Induktors Mittel zum Andrücken des im Induktor befindlichen Haltebolzens auf die Fügeposition der Trägerfläche vorgesehen sind.

Durch die Einlagerung von Klemmbacken in den beiden Endpositionen des Drehtellers und die Einlaufschrägen nach Anspruch 6 wird erreicht, daß die Bolzen mit dem Teller vorweg in die Aufnahmeposition eingeführt und dann bis zur Entnahmeposition sicher gehalten werden können, ohne daß die Klemmbacken extra betätigt werden müssen. Das Öffnen der Klemmbacken erfolgt allein durch Einführen des Tellers über die Einlaufschräge gegen die Kraft der Federn.

Unter Induktor ist hier ein zylinderförmiges Gehäuse - gegebenenfalls mit einem Bundring am unteren Ende - zu verstehen, dessen Innendurchmesser etwas größer als der Außendurchmesser des Tellerbundes ist. Dieses Induktorgehäuse sitzt am Gehäuse unterhalb der Entnahmeposition in Verlängerung der Verschiebeachse der Greifarme. Die Gehäusewand des Induktors ist hierbei bis in den Bund hinein von einer oder mehreren Spulenwindungen durchdrungen, welche bei Stromfluß ein Magnetfeld erzeugen. Hierdurch wird sowohl der sich im Induktor befindliche Bolzen als auch die Trägerfläche rasch erwärmt. Durch die Wärmeeinwirkung wird der Klebstoff an der Bolzentellerunterseite aufgeschmolzen, wodurch der Bolzenteller mit der Trägeroberfläche verklebt wird.

Bei einer anderen bevorzugten Ausführungsform der Bolzensetzvorrichtung wird als Mittel zum Andrücken der Klebebolzen ein von einem Kraftkolbenzylinder betätigter Anpreßstempel verwendet, welcher in axialer Verlängerung des Induktors im Gehäuse verschieblich geführt ist, wobei der Bolzenzuführkanal von einer Seite des Gehäuses aus unterhalb der oberen Lage des Anpreßstempels unter einem spitzen Winkel in die verlängerte Achse des Induktors einmündet.

Der Anpreßstempel ist hierbei zweckmäßigerweise über eine Stempelstange mit einem pneumatisch wirkenden Anpreßzylinder verbunden, der wiederum von einem pneumatisch wirkenden Vorschubzylinder getrieben wird, welcher den Anpreßstempel von der Ausgangsstellung in die Fügestellung fährt. Die Beaufschlagung des Anpreßstempels durch zwei Zylinder bietet den Vorteil, daß die Hauptbewegung des Stempels durch den Vorschubzylinder erfolgt, während der Anpreßzylinder mit einem wesentlich kürzeren Hub ausgestattet ist, welcher beim Anpressen des Klebebolzens durch das Wegschmelzen der Klebschicht benötigt wird.

Als Bolzenauffangstation wird hierbei zweckmäßigerweise ein Schieber verwendet, der im Bolzenzuführkanal oberhalb des Induktors quer zur Achse des Kanals einführbar und auf der Bolzenzuführseite mit einer Dämpfungsplatte bestückt ist.

In den Zeichnungen sind zwei Ausführungsbeispiele der Erfindung dargestellt, welche nachfolgend näher beschrieben werden. Es zeigt
- Figur 1: das Gehäuse einer erfindungsgemäßen Bolzensetzvorrichtung in Seitenansicht,
- Figur 2: einen Längsschnitt durch das Gehäuse gemäß Linie II - II in Figur 1,
- Figur 3: das Gehäuse der Bolzensetzvorrichtung in Draufsicht,
- Figur 4: einen Schnitt durch den Übergabeteller gemäß Linie IV - IV in Figur 1,
- Figur 5: einen zum Setzen vorgesehenen Gewindebolzen in Seitenansicht
- Figur 6: einen Längsschnitt durch das Gehäuse gemäß Linie VI - VI in Figur 3 mit Greifzange in Ausgangsposition,
- Figur 7: den gleichen Längsschnitt wie Figur 6, mit auf Entnahmeposition abgesenkter Greifzange,
- Figur 8: den gleichen Längsschnitt wie Figur 6, jedoch mit Greifzange in Bolzensetz- bzw. Fügeposition,
- Figur 9: das Gehäuse einer anderen Ausführungsform der Bolzensetzvorrichtung in Seitenansicht mit teilweisem Einblick auf die Schieberanordnung,
- Figur 10: einen Längsschnitt durch das Gehäuse gemäß Linie X-X in Figur 9,
- Figur 11: einen Teilquerschnitt durch das Gehäuse gemäß Linie XI-XI in Figur 9 oder 10 mit Draufsicht auf den geschlossenen Schieber,
- Figur 12: einen Ausschnitt des Bolzenzuführungskanals mit geschlossenem Schieber im Querschnitt gemäß Linie XII-XII in Figur 11,
- Figur 13: einen Längsschnitt durch das Gehäuse der Bolzensetzvorrichtung mit Stempel in Ausgangsposition,
- Figur 14: den gleichen Längsschnitt durch das Gehäuse mit Stempel in Fügeposition und
- Figur 15: einen vergrößerten Ausschnitt des unteren Setzbereichs in Fügeposition.

Die in den Figuren dargestellte Bolzensetzvorrichtung besteht in beiden Ausführungsformen jeweils aus einem länglichen Gehäuse **3** mit einer Bolzenauffangvorrichtung sowie einem Bolzenzuführungskanal **37**, welcher an seinem aus dem Gehäuse **3** austretenden Ende mit einem flexiblen Zuführschlauch **4** verbunden ist. Durch diesen Schlauch **4** werden die Klebebolzen **1** mit dem Tellerbund **5** voraus mittels Druckluft in das Gehäuse **3** und durch den Bolzenzuführungskanal **37** bis zur Auffangvorrichtung gefördert und gelangen von dort in einen am Ende des Zuführungskanals **37** befindlichen Induktor **11**. Das Gehäuse **3** kann mittels eines Verbindungsteils **31** an einen nicht dargestellten Robotorarm angeschlossen werden.

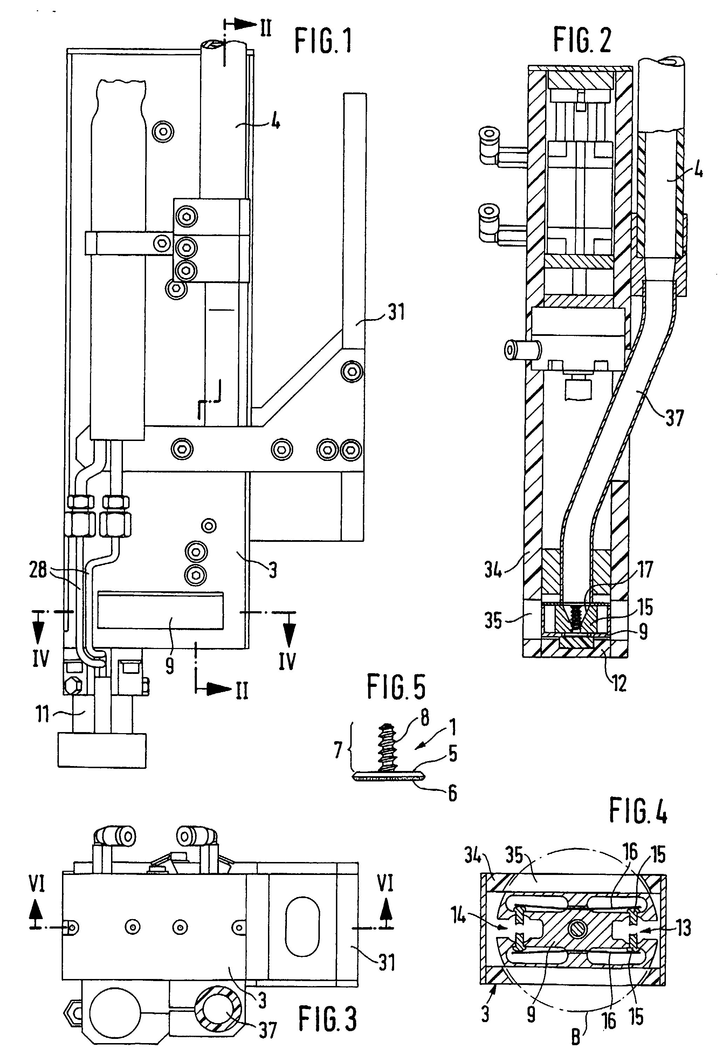

Die Haltebolzen **1** bestehen, wie aus Figur 5 ersichtlich, aus einem Schaft **7** und einem daran angeformten Tellerbund **5**, welcher an der Unterseite mit einem trockenen, durch Wärmeeinwirkung reaktivierbaren Schmelzklebstoff **6** beschichtet ist. Der Schaft **7** ist im vorliegenden Ausführungsbeispiel mit einem Grobgewinde **8** versehen, welches zur Befestigung von Halteelementen mit einer passend ausgebildeten Aufnahmebohrung für Gewindebolzen geeignet ist. Anstelle der Gewindebolzen können ebenso auch sogenannte Kopfbolzen oder glatte Bolzen verwendet werden, wenn die zugehörigen Befestigungselemente entsprechende Aufnahmen besitzen. Der Tellerbund **5** kann hierbei jede Flächengeometrie besitzen, welche für die Beförderung mittels Druckluft im Zuführschlauch **4** bezw. Bolzenzuführungskanal **37** geeignet ist.

Die wichtigsten Bauteile der in den Figuren 1 - 4 dargestellten Bolzensetzvorrichtung sind ein Übergabeteller **9**, eine Greifzange **10** und ein Induktor **11,** welche alle im Gehäuse **3** integriert sind und nachfolgend in Form und Funktion näher erläutert werden sollen:
Der Übergabeteller **9** ist unterhalb des Bolzenzuführungskanals **37** auf dem Gehäuse-boden **12** drehbar gelagert und besitzt eine Auffangstation **13** für die nacheinander zugeführten Bolzen **1** und - um 180° versetzt dazu - eine Entnahmestation **14.** In der Längswand **34** des Gehäuses **3** ist eine dem strichpunktierten Schwenkbogen ( **B** ) des Übergabetellers **9** angepaßte Öffnung **35** ausgespart.

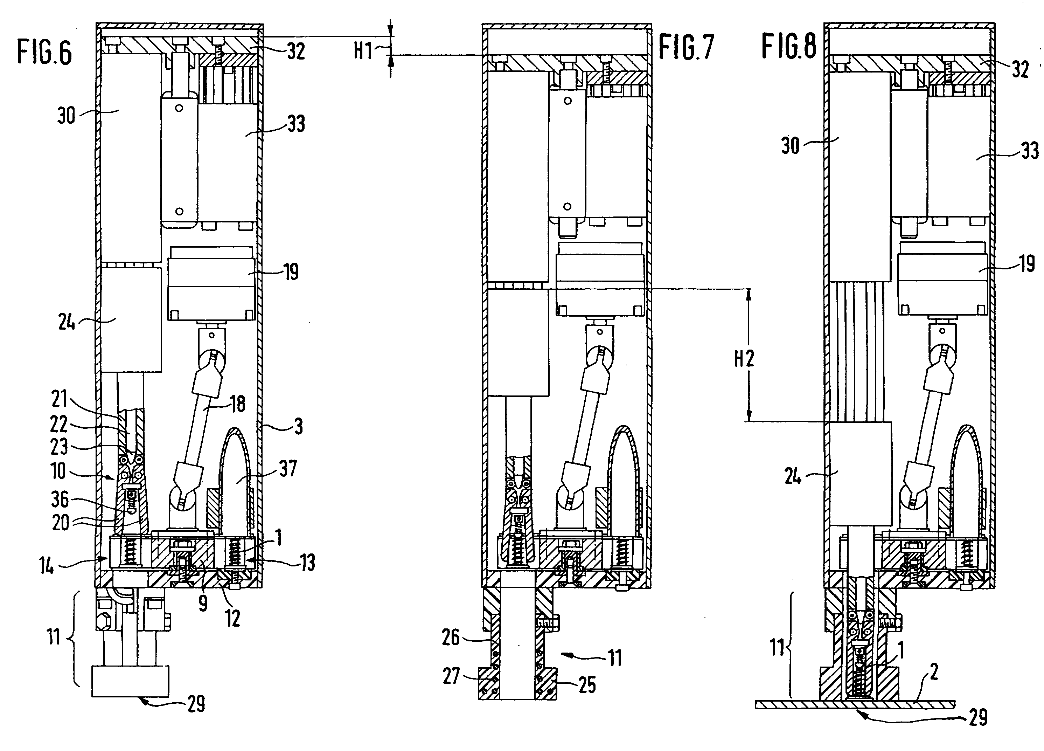

In beiden Stationen des Übergabetellers **9** sind je zwei gegenüberliegende Klemmbacken **15** gelagert, welche mittels Federn, beispielsweise Blattfedern **16**, zusammengedrückt werden. Die Klemmbacken **15** sind, wie aus Figur 2 ersichtlich, mit schrägen Einführflächen **17** versehen, welche bis auf den Durchmesser des Bolzenzuführungskanals **37** auseinanderstreben. Beim Zuführen der Bolzen **1** werden die Klemmbacken **15** von den Tellerbünden **5** beim Übergleiten der Einführflächen **17** auseinandergedrückt und durch die Rückstellkraft der Blattfedern **16** wieder in die Ausgangslage gebracht, in welcher der Bolzenschaft **7** von den Klemmbacken **15** fest umgriffen und gleichzeitig zentriert wird. Der Antrieb des Übergabetellers **9** erfolgt, wie aus Figur 6 ersichtlich, über eine Gelenkwelle **18** von einem oberhalb im Gehäuse **3** eingebauten Antriebsmotor **19**, welcher aus einem pneumatisch betätigten Schwenkzylinder besteht.

Die Greifzange **10** befindet sich oberhalb der Entnahmestation **14** und besteht aus zwei Greifarmen **20**, die am unteren Ende eines Rechteckhohlprofiles **21** schwenkbar gelagert sind. Das Rechteckhohlprofil **21** ist mit dem Gehäuse **24** eines Kurzhubantriebs verbunden, das wiederum an einen im Gehäuse **3** verschieblich geführten Kraftkolbenzylinder **30** angeschlossen ist. Im Rechteckhohlprofil **21** ist ein vom Kurzhubantrieb beaufschlagter Stößel **22** verschieblich geführt, welcher mit seiner Spitze **23** zwischen die verlängerten Enden der Greifarme **20** eingreift.

Die Greifarme **20** werden durch Federkraft auseinandergehalten und lassen sich durch Einführen des Stößels **22** zusammendrücken, indem die verlängerten Enden von der Stößelspitze **23** auseinandergedrückt werden. Zwischen den Greifarmen **20** befindet sich eine sogenannte Kalotte **36**, welche in Verschieberichtung federnd abgestützt ist und welche auf den Bolzen **1** drückt, wenn die Greifarme **20** an den Bolzenschaft **7** herangefahren sind.

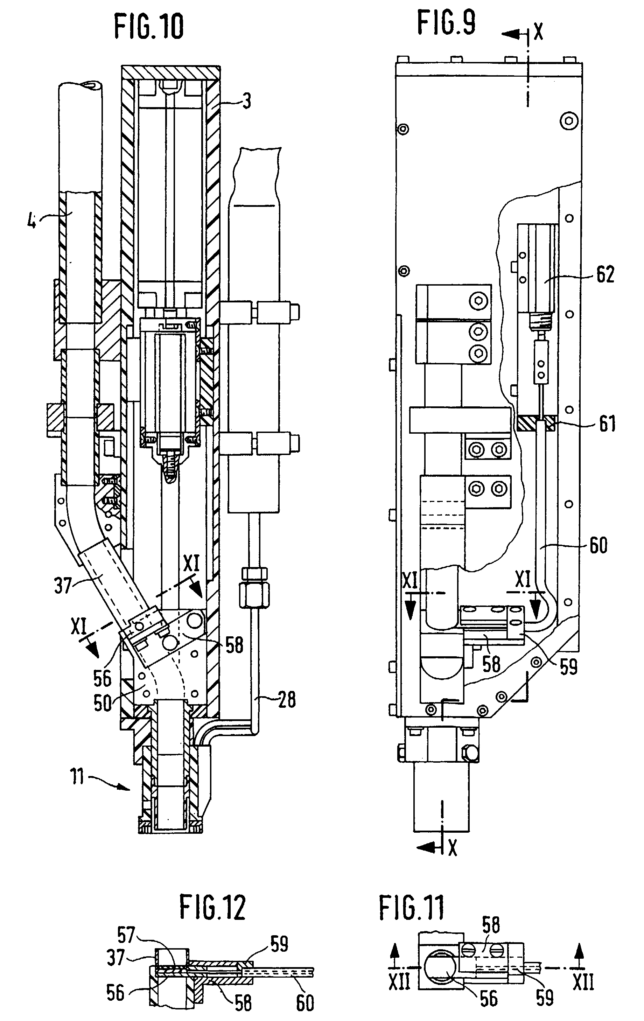

Der Kraftkolbenzylinder **30** ist über eine Traverse **32** an einen weiteren Kraftkolbenzylinder **33** gekoppelt, welcher parallel zur Verschieberichtung des Kraftkolbenzylinders **30** neben diesem im oberen Bereich des Gehäuses **3** installiert ist. Dieser zweite Kraftkolbenzylinder **33** wird getrennt vom ersten Kraftkolbenzylinder **30** gesteuert, so daß letzterer vom Kraftkolbenzylinder **33** um den Hub **H1** abwärts bewegt werden kann ( Figur 7 ). Andererseits wird die Greifzange **10** über das Gehäuse **24** des Kurzhubantriebs von dem Kraftkolbenzylinder **30** um den Hub **H2** in die untere Setzposition **29** verschoben ( Figur 8 ).

Der Induktor **11** ist am Gehäuse **3** unter dem Gehäuseboden **12** in Verlängerung der Entnahmeposition **14** des Übergabetellers **9** angesetzt und besteht aus einem zylinderförmigen Gehäuse **26**, das am unteren Ende mit einem Bundring **25** abschließt.

Der Innendurchmesser des Gehäuses **26** ist hierbei etwas größer als der Außendurchmesser des Tellerbundes **5**, so daß der Bolzen **1** von der Greifzange **10** frei in die Öffnung des Induktors **11** eingeführt werden kann.

Das Gehäuse **26** ist bis in den Bundring **25** hinein von mehreren Induktionsspulen **27** durchdrungen, welche von außen über Leitungen **28** mit Strom versorgt werden. Sobald die Greifzange **10** den Bolzen **1** in den Innenraum des Induktors **11** abgesenkt hat, wird über einen nicht dargestellten Sensor der Strom eingeschaltet. Dadurch wird ein Magnetfeld erzeugt, welches den Bolzen **1** rasch erwärmt und dadurch die Klebstoffschicht **6** unterhalb des Tellerbundes **5** in kürzester Zeit zum Schmelzen bringt.

Die Arbeitsweise der vorbeschriebenen Vorrichtung ist durch folgende Verfahrensschritte gekennzeichnet:

Zunächst wird ein Bolzen **1** vom Zuführungskanal **37** in die Aufnahmeposition **13** des Übergabetellers **9** zugeführt, wobei die Klemmbacken **15** vom Tellerbund **5** des Bolzens **1** auseinandergedrückt werden und dann wieder zusammenfedern, so daß der Bolzenschaft **7** von den Klemmbacken **15** sicher gehalten wird ( Figur 2 ).

Sodann wird der Teller **9** durch die Öffnung **35** um 180° geschwenkt und der Bolzen **1** in die Entnahmeposition **14** gebracht. Die Greifzange **10** wird nun durch Betätigung des Kraftkolbenzylinders **33** um den Hub **H1** abgesenkt ( Figur 7 ) und der Bolzenschaft **7** durch die beiden Greifarme **20** erfaßt, welche vom Stößel **22** zusammengedrückt werden. Nachdem der Robotorarm die Setzvorrichtung in die Fügeposition **29** gefahren hat ( Figur 8 ), wird die Greifzange **10** mittels des zweiten Kraftkolbenzylinders **30** entsprechend dem Hub **H2** so weit abgesenkt, bis der Tellerbund **7** des Bolzens **1** mit dem unteren Rand des Induktors **11** auf der gleichen Höhe abschließt. Der Induktor **11** liegt hierbei mit seinem Bundring **25** auf der Trägerfläche **2** auf. Die Greifarme **20** werden nun leicht geöffnet, so daß der Bolzen **1** mittels der federnd abgestützten Kalotte **23** auf die Trägerfläche **2** gedrückt wird.

Nun wird der Induktionsstrom eingeschaltet und damit das Magnetfeld aktiviert, welches einen Frequenzbereich von vorzugsweise 10 KHz bis 30 MHz aufweist. Durch die hierbei er-zeugte Wärme wird der Klebstoff **6** an der Unterseite des Tellerbundes **7** geschmol-zen, so daß dieser sich mit der Oberfläche der Trägerfläche **2** adhäsiv verbindet.

Nach einer kurzen Zeitspanne ist die zur Weiterverarbeitung angestrebte Haftfestigkeit erreicht. Dann wird der Bolzen **1** von den Greifarmen **20** freigegeben und die Setzvorrichtung kann vom Roboter in die nächste Fügeposition **29** gefahren werden.

Während der relativ schnell ablaufenden Fügeaktion ist bereits der nächste Bolzen **1** durch den Zuführungskanal **37** in die Aufnahmestation **13** des als Puffer wirkenden Übergabetellers **9** gelangt und kann in die Entnahmestation 14 geschwenkt werden, sobald die Greifzange **10** in ihre Ausgangsstellung ( Figur 6 ) zurückgefahren ist.

Die in den Figuren 9 - 15 dargestellte Ausführungsform der Bolzensetzvorrichtung kann - genau wie die vorbeschriebene Ausführungsform - am Arm eines nicht dargestellten Roboters montieret sein oder aber von Hand geführt und gesetzt werden. Diese Ausführungsform unterscheidet sich von der vorbeschriebenen Ausführungsform nach Fig. 1 - 4 im wesentlichen durch zwei Konstruktionsänderungen: Erstens erfolgt das Andrücken der Klebebolzen **1** in der Fügeposition **29** mittels eines pneumatisch getriebenen Anpreßstempels **38** und zweitens werden die Klebebolzen **1** im Bolzenzuführungskanal **37** nunmehr durch einen Schieber **56** aufgefangen. Bei der nachfolgenden Beschreibung der geänderten Ausführungsform erhalten die Bauteile, die in gleicher Bauform oder Funktion auch bei der ersten Ausführungsform vorkommen, die gleichen Bezugszahlen.

Die Bolzensetzvorrichtung besteht auch hierbei aus einem Gehäuse **3** mit einem Bolzenzuführungskanal **37,** welcher an seinem aus dem Gehäuse **3** vorstehenden Ende mit einem flexiblen Zuführschlauch **4** für die Bereitstellung der Bolzen **1** verbindbar ist. Am Ende des Bolzenzuführungskanals **37** befindet sich ebenfalls der Induktor **11,** welcher aus einem zylinderförmigen Gehäuse **26** gebildet ist, das an seinem unteren Ende mit einem Bundring **25** abschließt. In diesen ist eine Induktionsspule **27** mit zwei Windungen eingelassen, welche zur raschen Erwärmung von außen über Leitungen **28** mit Strom versorgt werden.

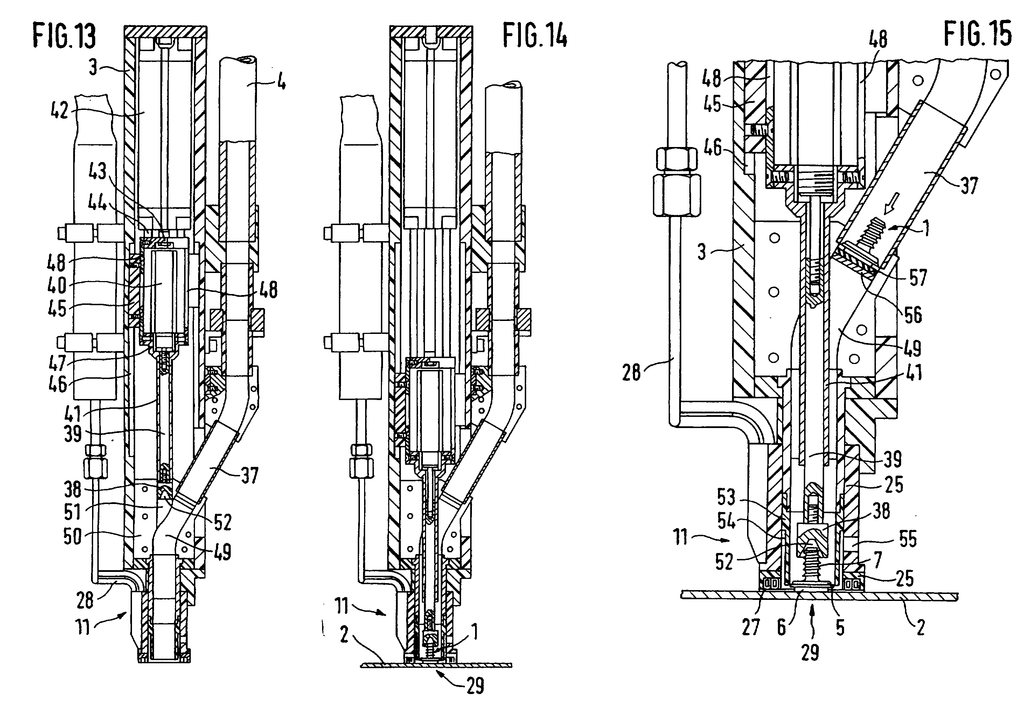

Der Anpreßstempel **38** ist über eine Stempelstange **39** mit einem pneumatisch beaufschlagten Anpreßzylinder **40** verbunden und in axialer Verlängerung des Induktors **11** verschieblich geführt. Der Anpreßzylinder **40** wird wiederum von einem ebenfalls pneumatisch beaufschlagten Vorschubzylinder **42** getrieben, welcher im Gehäuse **3** fest installiert ist und den Anpreßstempel **38** von der Ausgangsposition ( Figur 13 ) in die Fügeposition ( Figur 14 und 15 ) fährt.

Der Anpreßzylinder **38** ist zu diesem Zweck über eine Jochplatte **43** mit den Kolben **44** des Vorschubzylinders **42** verbunden und an beiden Seiten mittels Gleitsteinen **45** in entsprechenden Nuten **46** des Gehäuses **3** verschieblich geführt. Der Anpreßzylinder **40** ist in der Bewegungsachse des Vorschubzylinders **42** zwischen dessen Jochplatte **43** und dem Flansch **4+7** einer Stempelstangenführung **41** positioniert und mit diesem Flansch **47** verschraubt. Flansch **47** und Jochplatte **43** sind außerdem durch vier Haltebleche **48** miteinander verbunden.

Die Stempelstangenführung **41** befindet sich in ihrer oberen Ausgangsposition außerhalb des Bolzenzuführungskanals **37,** welcher von der Seite des Gehäuses **3** aus unterhalb der oberen Lage des Anpreßstempels **38** unter einem spitzen Winkel in die verlängerte Achse des Induktors **11** mit einer bogenförmigen Umlenkung **49** einmündet. Diese Umlenkung **49** ist in einem zweigeteilten Einschußkanal **50** so eingefräst, daß die Klebebolzen **1** mühelos in den Induktor **11** gefördert werden können.

Zum Verschieben des Anpreßstempels **38** in die Fügeposition **29** ist für die Stempelstangenführung **41** im Einschußkanal **50** in der verlängerten Achse des Induktors **11** eine Führungsbahn **51** ausgebohrt. Wie besonders aus Figur 15 zu ersehen ist, hat der an der Stempelstange **39** angeschraubte Anpreßstempel **38** den gleiche Außendurchmesser wir die Stempelstangenführung **41**. Der Stempel **38** weist ferner an seiner Anpreßseite eine trichterförmige Aussparung **52** auf, welche dazu bestimmt ist, den Klebebolzen **1** über den Bolzenschaft **7** auf die Trägerfläche **2** anzupressen und gleichzeitig im Induktor **11** während des adhäsiven Fügevorganges zu zentrieren.

Am Ende des Bolzenzuführungskanals **38** befindet sich eine Luftzuführungsdüse **53,** welche dicht oberhalb der Auflagefläche des Bundringes **25** endet. Damit zum Aufbau eines Fließdruckes hinter dem Tellerbund **5** stets ein ausreichender Luftstrom durch die Luftführungsdüse **53** gewährleistet ist, besteht zwischen dieser und dem Induktor **11** ein konzentrischer Spalt **54**. Das Induktorgehäuse **26** besitzt für einen entsprechenden Luftaustritt am oberen Ende des Spaltes **54** mehrere radial angeordnete Bohrungen **55**, die die Luft seitlich vom Induktor **11** entweichen läßt, wenn der Klebebolzen **1** während des Fügevorgangs auf der Trägerfläche **2** aufsitzt.

Wie aus Figur 9 und 10 ersichtlich, ist im Bolzenzuführungskanal **37** oberhalb des Induktors **11** ein quer zur Achse des Kanals **37** einführbarer Schieber **56** vorgesehen, welcher auf der Bolzenzuführseite mit einer Dämpfungsplatte **57** bestückt ist. Dieser Schieber **56** ist in einem Gehäuse **58** verschiebbar geführt, welches außen auf dem geschlossenen Einschußkanal **50** angeschraubt ist.

Der Schieber **56** ist an seinem rückwärtigen Ende mit einem Bowdenzug **60** verbunden, welcher , wie besonders aus Figur 9 ersichtlich, über ein Widerlager **61** an einen im oberen Gehäuse **3** fest installierten Betätigungszylinder **62** angeschlossen ist. Im Schiebergehäuse **58** bildet das rückwärtige Ende einen Schieberanschlag **59.**

Der Schieber **56** kann, um seiner Auffangfunktion gerecht zu werden, grundsätzlich so dicht vor dem Induktor **11** angeordnet sein, wie es die Platzverhältnisse im Gehäuse **3** zulassen. Es ist jedoch zweckmäßig, den Schieber **56** , wie gezeichnet, seitlich neben der Führungsbahn **51** des Anpreßstempels **38** im Bolzenzuführungskanal **37** anzuordnen, und zwar möglichst kurz vor dessen Umlenkung **49**. In diesem Fall kann der Schieber **56** bereits nach der Weiterführung des Klebebolzens **1** in den Induktor **11** zum Auffangen des nachfolgenden Bolzens **1** wieder zugefahren werden, während der vorangegangene Bolzen **1** noch in der Fügeposition **29** verharrt und vom Stempel **38** an die Trägerfläche **2** angepreßt wird. Der Schieber **56** kann auf diese Weise - genau wie der Übergabeteller **9** der zuerst beschriebenen Ausführungsform - als Puffer verwendet werden (siehe Figur 15).

Die Bolzensetzvorrichtung der in den Figuren 9 bis 15 dargestellten Ausführungsform arbeitet in folgender Weise:

Der Klebebolzen **1** wird bei geschlossenem Schieber **56** durch den Zuführschlauch **4** in den Bolzenzuführungskanal **37** eingeschossen und von der Dämpfungsplatte **57** abgebremst und aufgefangen. Wenn der Induktor **11** seine Fügeposition **29** erreicht hat, wird der Schieber **56** mittels des Betätigungszylinder **62** über den Bowdenzug **60** geöffnet und der Klebebolzen **1** fliegt, vom Luftdruck getrieben, durch die Umlenkung **49** in den Induktor **1**. Sobald der Bolzen **1** auf der Trägerfläche **2** aufsetzt, werden der Vorschubzylinder **42** und der Anpreßzylinder **40** zeitgleich mit Druckluft beaufschlagt, während die Einschußdruckluft kurz abgeschaltet wird.

Der Vorschubzylinder **42** fährt die Stempelführung **41** dabei in die Fügestellung und der Anpreßzylinder **40** betätigt über die Stempelstange **39** den Anpreßstempel **38**, welcher nach Einschalten des Induktionsstromes während des adhesiven Fügevorganges die notwendige Anpreßkraft auf den Klebebolzen **1** überträgt. Der Verschiebeweg des Anpreßzylinders **40** ist hierbei so bemessen, daß der Stempel **38** trotz Verringerung des Abstands zwischen dem Tellerbund **5** und der Trägerfläche **2** während des Wegschmelzens der Klebeschicht **6** mit dem Klebebolzen **1** stets mit gleicher Anpreßkraft in Kontakt bleibt.

Nachdem die angestrebte Haftfestigkeit des Klebeolzens **1** erreicht ist, kann die Setzvorrichtung von der Trägerfläche **2** zurückgefahren und in die nächste Fügeposition **29** gebracht werden.

## Patentansprüche

1. Vorrichtung zum automatisierten Setzen *und Aufkleben* von Haltebolzen auf Trägerflächen, wobei die Haltebolzen ( 1 ) mit Tellerbünden ( 5 ) versehen sind, welche an ihrer Unterseite mit einem trockenen, durch Wärmeeinwirkung reaktivierbaren Schmelzklebstoff ( 6 ) beschichtet sind; *unter Verwendung eines länglichen Gehäuses ( 3 ) mit einer Bolzenauffangvorrichtung und einem Bolzenzuführungskanal ( 37) , welcher an seinem aus dem Gehäuse ( 3 ) vorstehenden Ende mit einem flexiblen Zuführschlauch ( 4 ) verbindbar ist, durch welchen die Haltebolzen ( 1 ) mittels Druckluft in das Gehäuse ( 3 ) und durch den Bolzenzuführungskanal ( 37 ) bis zur Auffangvorrichtung förderbar sind,* **dadurch gekennzeichnet,** daß sich am Ende des Bolzenzuführungskanals (37) ein mit einer Induktionsspule versehener Zylinder (11) - nachfolgend Induktor genannt - befindet, *in welchen der Haltebolzen ( 1 ) mit dem Tellerbund ( 5 ) voraus einführbar ist*, wobei oberhalb des Induktors ( 11 ) Mittel zum Andrücken des im Induktor ( 11 ) befindlichen Haltebolzens ( 1 ) auf die Fügeposition der Trägerfläche ( 2 ) vorgesehen sind.

2. Bolzensetzvorrichtung nach Anspruch 1 unter Verwendung einer Greifzange ( 10 ) zum Erfassen des Bolzenschaftes ( 7 ) und Andrücken des Bolzens (1) auf die vorgesehene Fügeposition ( 29 ) der Trägerfläche ( 2 ) **dadurch gekennzeichnet,** daß im Gehäuse ( 3 ) unterhalb des Bolzenzuführungskanals ( 4) ein Übergabeteller ( 9 ) drehbar gelagert ist, welcher mit einer Auffangtation (13) für die einzelnd zugeführten Bolzen ( 1 ) und einer um 180° versetzten Entnahmestation ( 14 ) versehen ist, wobei die verschieblich geführte Greifzange ( 10 ) oberhalb und der Induktor ( 11 ) unterhalb der Entnahmestation ( 14 ) angeordnet sind.

3. Bolzensetzvorrichtung nach Anspruch 2, dadurch gekennzeichnet, daß der Tellerbund ( 5 ) des Bolzens ( 1 ) in der untersten Haltestellung mit dem unteren Rand des Induktors (11) auf gleicher Höhe abschließt.

4. Bolzensetzvorrichtung nach Anspruch 2 oder 3, dadurch gekennzeichnet, daß zwischen den Greifarmen ( 20 ) der Greifzange ( 10 ) eine in Andrückrichtung federnd abgestützte Kalotte ( 36 ) gelagert ist, welche bei Erreichen der Fügeposition auf den Bolzen ( 1 ) einwirkt und diesen mit konstanter Kraft auf die Trägerfläche ( 2) drückt.

5. Bolzensetzvorrichtung nach einem der Ansprüche 2 bis 4, dadurch gekennzeichnet, daß die Greifzange ( 10 ) von zwei miteinander gekoppelten Kraftkolbenzylindern ( 30 ) und (33) betätigt wird, wobei der eine Kraftkolbenzylinder ( 33 ) die Bewegung der Greifzange ( 10 ) von der Ruhestellung in die erste Greifposition zum Erfassen des Bolzenschaftes ( 7 ) steuert und der andere Kraftkolbenzylinder ( 30 ) den von den Greifarmen ( 20) erfaßten Haltebolzen ( 1 ) in die Fügeposition ( 29) auf der Trägerfläche (2) bewegt.

6. Bolzensetzvorrichtung nach einem der Ansprüche 2 bis 5, dadurch gekennzeichnet,daß im Übergabeteller ( 9 ) in den Endpositionen je zwei gegenüberliegende Klemmbacken ( 15 ) auffederbar gelagert sind, welche in Zuführrichtung der Haltebolzen ( 1) mit schrägen Einlaufflächen ( 17) versehen sind.

7. Bolzensetzvorrichtung nach Anspruch 1, dadurch gekennzeichnet, daß zum Andrücken der Haltebolzen ( 1 ) auf die Trägerfläche ( 2 ) ein pneumatisch beaufschlagter Anpreßstempel ( 38) vorgesehen ist, welcher in axialer Verlängerung des Induktors ( 11 ) im Gehäuse ( 3 ) verschieblich geführt ist, wobei der Bolzenzuführungskanal ( 37 ) von einer Seite des Gehäuses ( 3 ) aus unterhalb der oberen Lage des Anpreßstempels ( 38 ) unter einem spitzen Winkel in die verlängerte Achse des Induktors (11) einmündet.

8. Bolzensetzvorrichtung nach Anspruch 7, dadurch gekennzeichnet, daß der Anpreßstempel ( 38 ) über eine Stempelstange ( 39 ) mit einem pneumatisch beaufschlagten Anpreßzylinder ( 40 ) verbunden ist, der wiederum von einem pneumatisch beaufschlagten Vorschubzylinder ( 42 ) getrieben wird, welcher den Anpreßstempel ( 38) von der Ausgangsposition in die Fügeposition fährt.

9. Bolzensetzvorrichtung nach einem der Ansprüche 7 oder 8, dadurch gekennzeichnet, daß zum Auffangen der zugeführten Haltebolzen ( 1 ) im Bolzenzuführungskanal ( 37 ) oberhalb des Induktors ( 11 ) ein quer zur Achse des Kanals ( 37 ) einführbarer Schieber ( 56 ) vorgesehen ist, welcher auf der Bolzenzuführseite mit einer Dämpfungsplatte ( 57 ) bestückt ist.

10. Bolzensetzvorrichtung nach Anspruch 9, dadurch gekennzeichnet, daß der Schieber ( 56 ) seitlich neben der Führungsbahn ( 51 ) des Anpreßstempels ( 38 ) im Bolzenzuführungskanal ( 37 ) angeordnet ist.

11. Arbeitsverfahren zum automatisierten Setzen von Halte- oder Befestigungsbolzen unter Verwendung einer Vorrichtung nach Anspruch 1,
**gekennzeichnet** durch folgende Verfahrensschritte:
• Heranführen der vereinzelten Bolzen mittels Druckluft
• Auffangen und Weiterleiten in eine von einem induzierenden Magnetfeld umgebenen Fügeposition,
• Halten des Bolzens in der Fügeposition,
• Aktivierung des Magnetfeldes unter gleichzeitigem Andrücken des Tellerbundes auf die Trägerfläche und
• Freigabe des Bolzens nach Erreichen der für die weitere Verarbeitung erforderlichen Mindesthaftfestigkeit.

## Claims

1. Apparatus for automated placing and glueing of holding studs on carrier surfaces, wherein the holding studs (1) are provided with collar discs (5) which at their underside are coated with a dry hot-melt adhesive (6) which can be reactivated under the action of heat; using an elongate housing (3) with a stud receiving device and a stud feed passage (37) which at its end projecting from the housing (3) can be connected to a flexible feed hose (4) through which the holding studs (1) can be conveyed by means of compressed air into the housing (3) and through the stud feed passage (37) to the receiving device, characterised in that disposed at the end of the stud feed passage (37) is a cylinder (11) - hereinafter referred to as the inductor - which is provided with an induction coil and into which the holding stud (1) can be introduced with the collar disc (5) leading, wherein provided above the inductor (11) are means for pressing the holding stud (1) which is disposed in the inductor (11) on to the joining position on the carrier surface (2).

2. A stud placing apparatus according to claim 1 using a gripping tongs assembly (10) for gripping the stud shank (7) and pressing the stud (1) on to the intended joining position (29) on the carrier surface (2), characterised in that supported rotatably in the housing (3) beneath the stud feed passage (4) is a transfer plate (9) which is provided with a receiving station (13) for the individually fed studs (1) and a removal station (14) which is displaced through 180°, wherein the displaceably guided gripping tongs assembly (10) is arranged above the removal station (14) and the inductor (11) is arranged beneath the removal station (14).

3. A stud placing apparatus according to claim 2 characterised in that the collar disc (5) of the stud (1) in the lowermost holding position terminates at the same level with the lower edge of the inductor (11).

4. A stud placing apparatus according to claim 2 or claim 3 characterised in that mounted between the gripping arms (20) of the gripping tongs assembly (10) is a part-spherical portion (36) which is supported resiliently in the pressing direction and which when the joining position is reached acts on the stud (1) and presses same with a constant force on to the carrier surface (2).

5. A stud placing apparatus according to one of claims 2 to 4 characterised in that the gripping tongs assembly (10) is actuated by two power-operated piston-cylinder units (30) and (33) which are coupled together, wherein the one piston-cylinder unit (33) controls the movement of the gripping tongs assembly (10) from the rest position into the first gripping position for gripping the stud shank (7) and the other piston-cylinder unit (30) moves the holding stud (1) which is held by the gripping arms (20) into the joining position (29) on the carrier surface (2).

6. A stud placing apparatus according to one of claims 2 to 5 characterised in that two oppositely disposed clamping jaws (15) are resiliently openably mounted in the transfer plate (9) in each of the end positions and are provided with inclined run-in surfaces (17) in the direction of feed of the holding studs (1).

7. A stud placing apparatus according to claim 1 characterised in that for pressing the holding studs (1) on to the carrier surface (2) there is provided a pneumatically actuated pressing plunger (38) which is guided slidably in the housing (3) in axial alignment with the inductor (11), wherein the stud feed passage (37) extends from one side of the housing (3) beneath the upper position of the pressing plunger (38) at an acute angle into the extended axis of the inductor (11).

8. A stud placing apparatus according to claim 7 characterised in that the pressing plunger (38) is connected by way of a plunger rod (39) to a pneumatically actuated pressing cylinder (40) which in turn is driven by a pneumatically actuated advance cylinder (42) which moves the pressing plunger (38) from the starting position into the joining position.

9. A stud placing apparatus according to one of claims 7 and 8 characterised in that to receive the fed holding studs (1) provided in the stud feed passage (37) above the inductor (11) is a slider (56) which can be introduced transversely with respect to the axis of the passage (37) and which is provided on the stud feed side with a damping plate (57).

10. A stud placing apparatus according to claim 9 characterised in that the slider (56) is arranged laterally beside the guide path (51) of the pressing plunger (38) in the stud feed passage (37).

11. An operating procedure for the automated placing of holding or fixing studs using an apparatus according to claim 1, characterised by the following steps:
- supplying the separated studs by means of compressed air,
- receiving them and passing them on into a joining position which is surrounded by an inducing magnetic field,
- holding the stud in the joining position,
- activating the magnetic field while at the same time pressing the collar disc on to the carrier surface, and
- releasing the stud after attainment of the minimum adhesive strength required for further processing.

## Revendications

1. Dispositif pour poser et coller de façon automatisée des boulons de retenue sur des surfaces de support, les boulons de retenue (1) étant en l'occurrence munis de collerettes en forme de disques (5), dont la face inférieure est enduite d'une substance adhésive fusible (6) susceptible d'être réactivée sous l'effet d'un apport de chaleur ; par utilisation d'un boîtier de forme allongée (3) muni d'un dispositif de réception des boulons et d'un canal d'amenée des boulons (37) qui est destiné à être raccordé, au niveau de son extrémité faisant saillie hors du boîtier (3), à un tuyau d'amenée flexible (4), par l'intermédiaire duquel les boulons de retenue (1) peuvent être acheminés à l'aide d'air comprimé dans le boîtier (3) et par le canal d'amenée des boulons (37) jusque dans le dispositif de réception, caractérisé en ce qu'un vérin (11), muni d'une bobine d'induction, ci-après désigné sous l'appellation d'inducteur, est monté à l'extrémité du canal d'amenée des boulons (37), dans lequel le boulon de retenue (1) avec sa collerette en forme de disque (5) orientée vers l'avant, est destiné à être introduit, des moyens, destinés à exercer une pression d'application sur le boulon de retenue (1) lorsqu'il se trouve dans l'inducteur (11) dans sa position de pose sur la plaque support, étant en l'occurrence prévus au-dessus de l'inducteur (11).

2. Dispositif de pose de boulons selon la revendication 1 par utilisation d'une pince de préhension (10) pour saisir la tige (7) du boulon et appliquer, en exerçant une pression sur celui-ci, le boulon (1) dans la position de pose (29) prévue sur la surface support (2), caractérisé en ce que dans le boîtier (3), au-dessous du canal d'amenée des boulons (4), est monté un plateau de transfert (9) susceptible d'effectuer un mouvement de rotation, qui comporte un emplacement de réception (13) pour les boulons (1) introduits un par un et un emplacement de prélèvement (14), disposé à 180° du premier, la pince de préhension (10), agencée de manière à pouvoir coulisser, étant en l'occurrence disposée au-dessus et l'inducteur (11) placé au-dessous de l'emplacement de prélèvement (14).

3. Dispositif de pose de boulons selon la revendication 2, caractérisé en ce que la collerette en forme de disque (5) du boulon (1) arrive, dans sa position de maintien la plus basse, en affleurement du bord inférieur de l'inducteur (11).

4. Dispositif de pose de boulons selon la revendication 2 ou 3, caractérisé en ce qu'entre les bras de préhension (20) de la pince de préhension (10) est montée une cuvette (36) en position d'appui élastique dans la direction d'application de la pression, qui, lorsque la position de pose est atteinte, agit sur le boulon (1) et l'applique sur ia surface de support (2) en exerçant une force constante.

5. Dispositif de pose de boulons selon l'une des revendications 2 à 4, caractérisé en ce que la pince de préhension (10) est actionnée par deux vérins à tige de transmission d'énergie (30) et (33) accouplés ensemble, l'un des vérins à tige de transmission d'énergie (33) commandant en l'occurrence le déplacement de la pince de préhension (10), de sa position de repos jusque dans sa position de préhension de la tige (7) du boulon, et l'autre vérin à tige de transmission d'énergie (30) amenant le boulon de retenue (1), saisi par les bras de préhension (20), dans sa position de pose (29) sur la surface de support (2).

6. Dispositif de pose de boulons selon l'une des revendications 2 à 5, caractérisé en ce que, dans le plateau de transfert (9), au niveau des positions d'extrémité, sont respectivement montées, en position diamétralement opposée, deux mâchoires de serrage (15) capables de réagir par déformation élastique, qui sont munies, dans la direction d'amenée des boulons de retenue (1), de surfaces d'introduction obliques (17).

7. Dispositif de pose de boulons selon la revendication 1, caractérisé en ce qu'il est prévu, pour appliquer sous pression les boulons de retenue (1) sur la surface de support (2), un poinçon de mise en pression à commande pneumatique, qui et disposé coulissant dans de boîtier (3) dans le prolongement axial de l'inducteur (11), le canal d'amenée des boulons (37) débouchant en l'occurrence, depuis un côté du boîtier (3), au-dessous de la position haute du poinçon de mise en pression (38), suivant une disposition en angle aigu, dans le prolongement de l'axe de l'inducteur (11).

8. Dispositif de pose de boulons selon la revendication 7, caractérisé en ce que le poinçon de mise en pression (38) est relié, par l'intermédiaire d'une tige de poinçon (39), à un vérin pneumatique de mise en pression (40), qui est lui-même entraîné par un vérin d'avancement à commande pneumatique (42), qui assure le déplacement du poinçon de mise en pression (38) de sa position initiale jusque dans sa position de pose.

9. Dispositif de pose de boulons selon l'une des revendications 7 ou 8, caractérisé en ce qu'il est prévu, pour prendre en charge les boulons de retenue (1) insérés dans le canal d'amenée des boulons (37), au-dessus de l'inducteur (11), un organe de poussée coulissant (56) destiné à être introduit transversalement par rapport à l'axe du canal (37), qui est muni d'une plaque d'amortissement (57) sur sa face d'amenée des boulons

10. Dispositif de pose de boulons selon la revendication 9, caractérisé en ce que l'organe de poussée coulissant (56) est disposé latéralement à côté de la glissière (51) du poinçon de mise en pression (36) dans le canal d'amenée des boulons (37).

11. Mode opératoire pour la pose automatique de boulons de retenue ou de fixation en utilisant pour ce faire le dispositif selon la revendication 1, caractérisé en ce qu'il comprend les étapes suivantes :
• amenée des boulons préalablement isolés à l'aide d'air comprimé
• prise en charge et acheminement jusque dans une position de pose entourée par un champ magnétique inductif
• maintien du boulon dans sa position de pose
• activation du champ magnétique tout en appliquant sous pression la collerette en forme de disque sur la surface de support et
• libération du boulon une fois atteinte l'adhérence minimale nécessaire pour poursuivre les opérations de mise en oeuvre.
